# EUROPÄISCHE PATENTSCHRIFT

(11) **EP 1 269 069 B1**
(45) Veröffentlichungstag und Bekanntmachung des Hinweises auf die Patenterteilung: **04.08.2004**
(21) Anmeldenummer: 01919329.1
(22) Anmeldetag: 23.02.2001
(51) Int. Cl.: F16S 1/00

(54) **FLASCHENBEHANDLUNGSANLAGE**
INSTALLATION FOR TREATING BOTTLES
INSTALLATION DE TRAITEMENT DE BOUTEILLES

(30) Priorität: 29.02.2000 DE 20003626 U; 02.09.2000 DE 20015199 U
(43) Veröffentlichungstag der Anmeldung: 02.01.2003
(73) Patentinhaber: Autefa Automation GmbH, 86316 Friedberg (DE)
(72) Erfinder: HIRSCHEK, Herwig, 86399 Bobingen (DE)
(74) Vertreter: Ernicke, Klaus Stefan
(86) Internationale Anmeldenummer: PCT/EP2001/002040
(87) Internationale Veröffentlichungsnummer: WO 2001/064007

(56) Entgegenhaltungen:
- WO-A-99/55604
- DE-A- 2 740 262
- DE-A- 3 926 650
- DE-A- 4 000 186
- DE-U- 29 911 935
- GB-A- 699 100
- GB-A- 825 943
- US-A- 4 373 642

## Beschreibung

Die Erfindung betrifft eine Flaschenbehandlungsanlage und ein Verfahren zur Flaschenbehandlung mit den Merkmalen im Oberbegriff des Verfahrens- und Vorrichtungshauptanspruchs.

Eine solche Flaschenbehandlungsanlage ist aus der WO 99/55604 bekannt. Sie besteht aus mindestens einem Flaschenerzeuger, an den wenigstens ein Flaschenumsetzer angeschlossen ist, welcher die produzierten Flaschen auf einzelne Trays oder Zwischenträger umsetzt, die dann mit einer Transporteinrichtung zu einer Behandlungsstation, beispielsweise einer Füllanlage oder auch einem Palettierer oder dergleichen, transportiert werden können. An die Transporteinrichtung kann hierbei ein Lager zur Zwischenpufferung der leeren oder der mit Flaschen beladenen Trays angeschlossen sein. Bei dieser bekannten Flaschenbehandlungsanlage werden die Trays innerhalb der Anlage einzeln auf der Transporteinrichtung befördert. Die Trays sind dabei niedriger als die Flaschen. In einer abgewandelten Ausführungsform können die Trays die Flaschenbehandlungsanlage auch verlassen und in einem größeren Kreislauf zum Endkunden und zurück wandern. Hierbei können die einzeln zugeführten Trays vom Palettierer zur Palettenbildung aufeinander gestapelt und als Traystapel verschickt werden, wobei die Trays gegenseitige Führungen zur Stapelbildung haben.

Aus der GB 699 100 sind stapelbare Kisten mit geschlossenen Seitenwänden bekannt, die in den Eckbereichen an ihrer Ober- und Unterseite gegenseitig angepasste Führungen zur Stapelbildung aufweisen. Der Verbund lässt sich durch Federelemente sichern. Die Trays können geschlossene oder gitterförmige, teilweise geöffnete Seitenwände haben. Sie sind zum Transport von Backwaren oder befüllten Milch- oder Getränkeflaschen vorgesehen.

Ähnliche stapelbare Kisten für den allgemeinen Gütertransport sind auch aus der GB 825 943 und der US-A-4,373,642 bekannt.

Die DE-A-39 26 650 lehrt die Verpackung und Palettenbildung von Flaschen in halbhohen kartonartigen Behältnissen, wobei die Kartonböden der jeweils nächsthöheren Palettenlage direkt auf der Flaschenoberseite aufliegen.

Es ist Aufgabe der vorliegenden Erfindung, die Flaschenbehandlungsanlage und das Behandlungsverfahren weiter zu verbessern.

Die Erfindung löst diese Aufgabe mit den Merkmalen im Verfahrens- und Vorrichtungshauptanspruch. Bei der Flaschenbehandlungsanlage sind die Trays als stapelbare Behälter ausgebildet, die die Flaschen dicht und schützend umgeben. Die Trays können dabei eine der Flaschenhöhe in etwa entsprechende oder übersteigende Höhe aufweisen. Die Trays lassen sich in aufgeschichteten Traystapeln auf einer entsprechenden Transporteinrichtung anlagenintern, aber auch über Land befördern. Hierdurch können Kunststoffflaschen, insbesondere PET-Flaschen, an zentraler Stelle mit hohen Produktionskapazitäten hergestellt und im Traystapel geschützt sowie mit geringem Platzbedarf zu den innerbetrieblichen Behandlungsstationen sowie einem Stapellager oder auch zu externen und weiter entfernt liegenden Behandlungsstationen transportiert werden. Während des Transports sind die Flaschen im Traystapel geschützt und hygienisch untergebracht. Sie brauchen in den meisten keine weiteren Schutzmaßnahmen, was auch für einen Transport über Land, d.h. anlagenextern und ggf. über weitere Strecken gilt.

Die stapelbaren Trays erhohen die Kapazität und den Durchsatz der Flaschenbehandlungsanlage. Durch die Stapelbildung kann die Länge der Transporteinrichtung trotz hohen Flaschendurchsatzes verkleinert werden. Vorteilhaft ist außerdem die Verwendung von parallelen und mit Weichen angeschlossenen Haupt- und Nebenstrecken an der Transporteinrichtung für die Anbindung der Flaschenumsetzer und der anderen Behandlungsstationen. Hierdurch werden Staus an den Be- und Entladestellen vermieden.

Die Flaschenerzeuger und die Behandlungsstationen sind vorzugsweise jeweils über einen Traykreislauf an die Transporteinrichtung angeschlossen. Im Traykreislauf findet ein Aufstapeln und Entstapeln der Trays am Flaschenumsetzer statt. Auf diese Weise können die Trays sehr schnell be- und entladen werden.

Über die Transporteinrichtung können die Traystapel direkt zu den Behandlungsstationen, insbesondere einer Füllanlage, etc. transportiert werden. Alternativ oder zusatzlich ist auch die Anbindung eines Zwischenlagers moglich, in dem die Trays im Stapel eingelagert werden. Über das Zwischenlager finden eine Pufferung und ein Kapazitätsausgleich zwischen den über einen langeren Zeitraum produzierenden Flaschenerzeugern und den schneller arbeitenden Behandlungsstationen, insbesondere Fullanlagen, statt.

Die Trays lassen sich durch eine geeignete Gestaltung ihrer Seitenwände und ihrer Böden mit einer gegenseitigen formschlüssigen Führung direkt übereinander stapeln. Die formschlüssige Führung ist eine der Möglichkeiten, um die Flaschen im Stapel dicht zu umgeben und einzuschließen. Für den oberen dichten Abschluss des Traystapels kann ein leerer Tray oder ein spezieller Deckel aufgesetzt werden.

Die Trays und die Flaschenbehandlungsanlage sind für unterschiedliche Arten und Größen von Flaschen geeignet. Größere Flaschen können vom Flaschenumsetzer in einer aus der WO 99/55604 bekannten Weise stehend umgesetzt und auf den Trays zu einer Lage geordnet werden. Kleine Flaschen, die sich weniger gut für ein geordnetes Umsetzen eignen, können vom Flaschenumsetzer alternativ in entsprechend geeignete Trays regellos wie Schüttgut eingefüllt werden. In dieser Lage lassen sich die kleinen Flaschen auch zwischenspeichern, wobei sie vor dem Befüllen oder einem sonstigen Behandlungsvorgang von einem anderen Flaschenumsetzer in geeigneter Weise aus den Trays herausgenommen und in eine behandlungsgerechte Lage aufgestellt und geordnet werden.

Die Erfindung ermöglicht dabei eine bessere und schonendere Behandlung der relativ empfindlichen kleinen PET-Flaschen als beim Stand der Technik. Auf das bisher übliche Einfüllen der Flaschen in große Silos kann verzichtet werden. Die kleineren Trays haben dabei auch den Vorteil, dass die kleinen Flaschen in den unteren Lagen nicht durch das Eigengewicht der darauf lastenden Flaschen deformiert und zerdruckt werden. Eine Zwischenlagerung in kleineren Gebinden und Trays ist außerdem günstiger für die weitere Behandlung und insbesondere Befullung der Flaschen. Zudem kann mit der erfindungsgemaßen Flaschenbehandlungsanlage und dem standardisierten Traytransport auf die bisher ublichen bauaufwendigen und langen Forderbander zur Verbindung von Silos und Füllanlagen verzichtet werden.

Die erfindungsgemäße Flaschenbehandlungsanlage ist zudem wesentlich flexibler als vorbekannte Anlagen. Sie bietet neben der höheren Kapazität auch den Vorteil einer höheren Diversifikation. Innerhalb einer Anlage können völlig unterschiedliche Flaschenarten und Flaschenformate hergestellt bzw. eingeschleust und zwischengelagert oder gefüllt bzw. in anderer Weise behandelt werden. Hierbei lassen sich insbesondere auch die jeweiligen Mengen der unterschiedlichen Flaschen beliebig einstellen und handhaben.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine Draufsicht auf eine Flaschenbehandlungsanlage mit mehreren Flaschenerzeugern, einer Transporteinrichtung für Traystapel und mehreren Behandlungsstationen,
- Figur 2:: eine schematische Draufsicht auf ein Lager für Traystapel, das an die Transporteinrichtung der Flaschenbehandlungsanlage von Figur 1 anschließbar ist,
- Figur 3:: eine aufgebrochene Seitenansicht eines Traystapels
- Figur 4:: eine Variante der Trays für kleine Flaschen,
- Figur 5:: eine weitere Variante des Traystapels von Figur 3 und
- Figur 6:: eine Variante der Flaschenbehandlungsanlage von Figur 1.

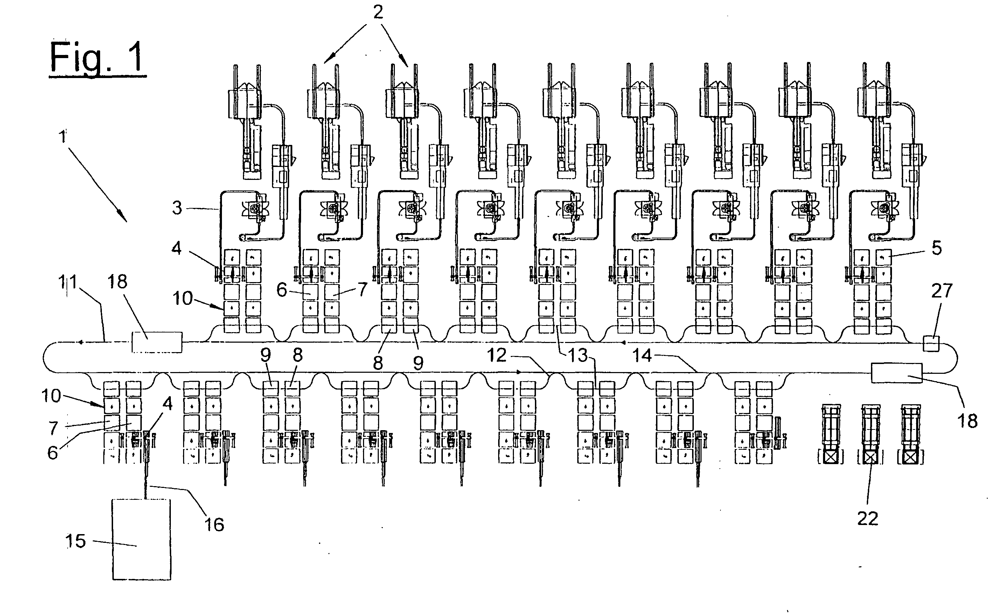

Figur 1 zeigt in einem Schemaplan eine Flaschenbehandlungsanlage (1), die ein oder mehrere Flaschenerzeuger (2), mindestens eine Transporteinrichtung (11) und ein oder mehrere Behandlungsstationen (15) aufweist. An die Flaschenbehandlungsanlage (1) kann außerdem mindestens ein Lager (17) angeschlossen sein.

Die Flaschenerzeuger (2) können in beliebig geeigneter Weise ausgebildet sein. Im gezeigten Ausfunrungsbeispiel handelt es sich um Blasmaschinen für PET-Kunststoffflaschen, denen jeweils bei Bedarf zusätzliche Geräte, z.B. eine nicht näher bezeichnete Entgratungseinrichtung und ein Leck-Prüfgerät nachgeschaltet sein können. Am Ende der Flaschenerzeuger (2) kommen die Flaschen (26,30) aus einer Ausgabelinie (3), die in beliebig geeigneter Weise, z.B. als Luftförderer, ausgebildet sein kann.

Alternativ können auch Flaschenzuführungen vorhanden sein. Diese nehmen neue oder gebrauchte und recycelte Flaschen (26,30) aus Kunststoff, Glas oder sonstigen Materialien auf, die auf Paletten oder auf andere Weise zugeführt werden, entpacken gegebenenfalls die Flaschen (26,30) und führen sie auf eine Ausgabelinie.

Die Behandlungsstationen (15) bestehen in der gezeigten Ausführungsform aus Füllanlagen mit Prüf- und Etikettiereinrichtungen, ggf. Wascheinrichtungen und einer nachgeschalteten Verpackungseinrichtung. Beispielsweise können die in Figur 1 dargestellten Palettierer (22) ausgangsseitig an die Bearbeitungsstationen (15) angeschlossen sein. Die Palettierer (22) können aber auch als Behandlungsstationen (15) fungieren und ebenfalls an die Transporteinrichtung (11) angeschlossen sein. Sie können ferner eine Verpackungseinrichtung, z.B. eine sogenannte Film-bagging-Maschine aufweisen.

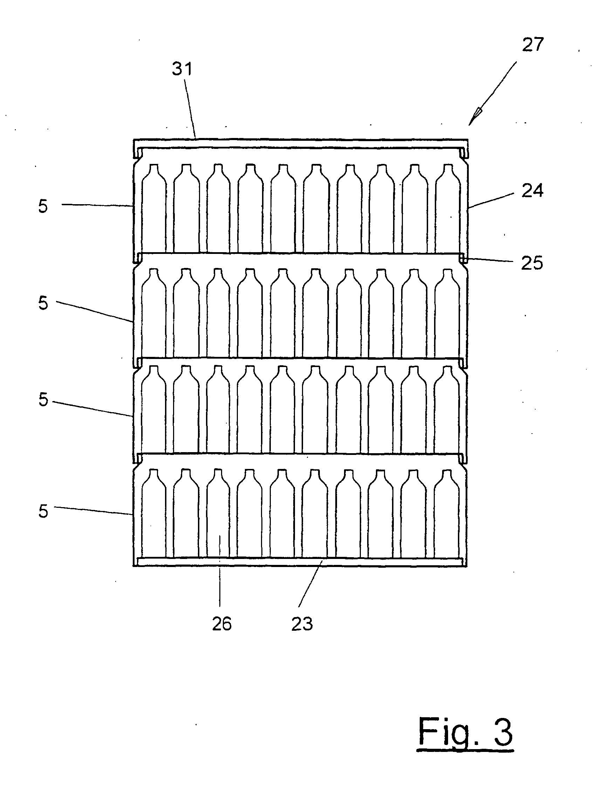

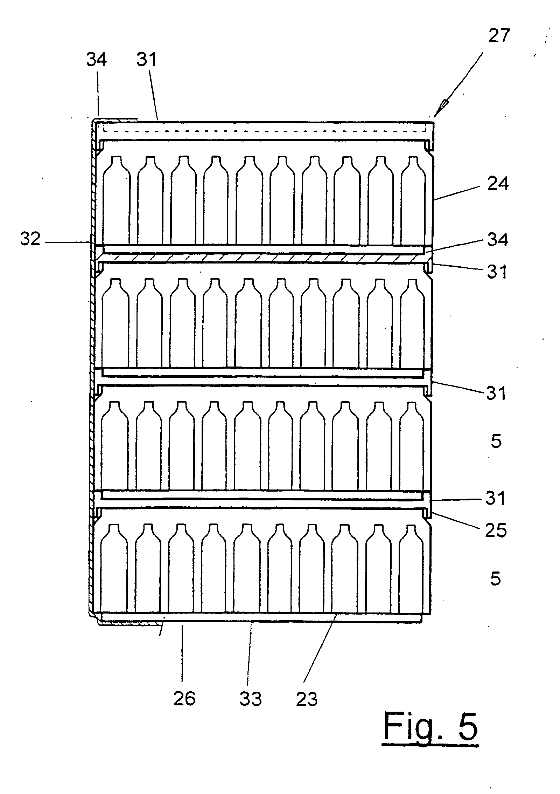

Die einzelnen Flaschen (26) werden in der einen Ausführungsform gemäß Figur 3 und 5 unter Bildung von stehenden Flaschenlagen auf Trays oder Zwischenträgern (5) zusammen gestellt. Hierbei handelt es sich um größere Flaschen, die selbstständig und stabil stehen können. Die Trays (5) sind vorzugsweise in etwa so hoch wie die Flaschen (26) oder höher. Sie bilden Behälter, die die Flaschen am Boden (23) und an den Seiten mit geschlossenen Wänden umgeben.

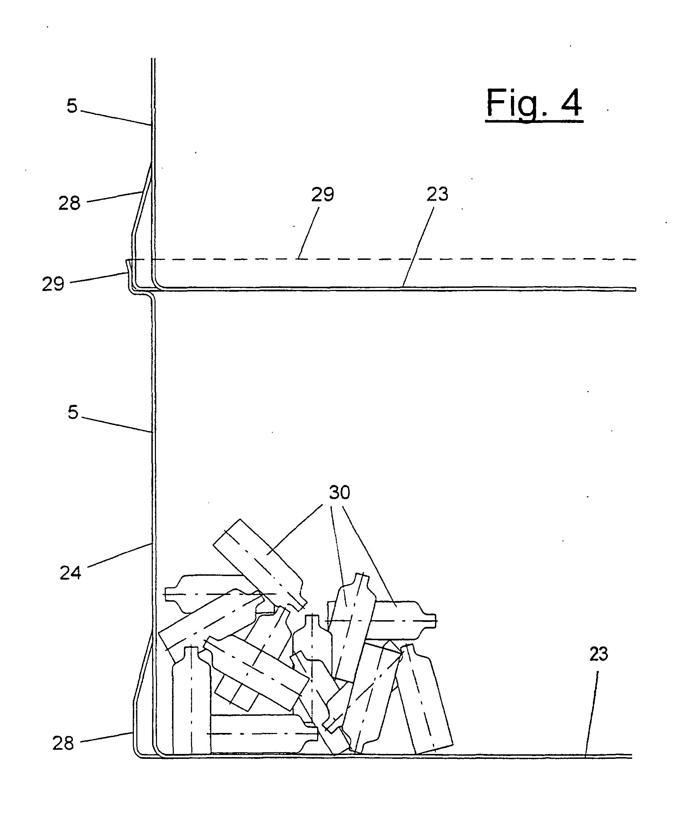

In der Variante von Figur 4 werden kleinere und labilere Flaschen (30) in regelloser Lage und ähnlich wie Schüttgut in die Trays (5) gefüllt. Die Flaschen (30) haben z.B. ein Volumen von ca. 0,1 oder 0,2 l. Die Trays (5) haben hier eine größere Höhe als die Flaschen (30) und sind als Kästen oder Container ausgestaltet. Die Trayhöhe richtet sich nach der Stabilität, insbesondere der Verformungsfestigkeit der Flaschen (30). Die Trayhöhe oder auch die Schütthöhe wird nur so groß gewählt, dass die unten liegenden Flaschen (30) von der Masse der oberen Flaschen (30) nicht zerdrückt oder unzulässig verformt werden.

Für den Transport werden aus den Trays (5) Traystapel (27) gebildet. Hierbei findet in geeigneter Weise an den Flaschenerzeugern (2) und den Behandlungsstationen (15) ein Auf- und Endstapeln statt. Die Stapelhöhe eine beliebig geeignete Größe haben und z.B. bis zu ca. 2 m betragen.

Den Flaschenerzeugern (2) und den Behandlungsstationen (15) sind hierbei jeweils Traykreisläufe (10) zugeordnet, in denen die Trays (5) zirkulieren. Die Traykreisläufe (10) beinhalten jeweils einen Flaschenumsetzer (4), der die Trays (5) mit den Flaschen (26,30) belädt bzw. entlädt. Der Flaschenumsetzer (4) kann hierfür in beliebig geeigneter Weise ausgebildet sein.

In der einen bevorzugten Ausführungsform für die größeren Flaschen (26) hat der Flaschenumsetzer (4) eine Ausgestaltung mit einer mehrachsig und vorzugsweise im wesentlichen linear beweglichen Greifeinrichtung und mit mehreren seitlich verstellbaren Reihengreifern entsprechend der WO 99/55604. Alternativ kann auch ein Knickarmroboter mit Greifwerkzeug eingesetzt werden. Die Flaschen (26) werden hierbei stehend umgesetzt und dazu einzeln gegriffen, z.B. am Flaschenhals.

In der anderen bevorzugten Ausführungsform für die kleinen Flaschen (30) ist der zum Beladen eingesetzte Flaschenumsetzer (4) z.B. als Schütteinrichtung ausgebildet, mit der die vom Flaschenerzeuger (2) kommenden Flaschen (30) direkt in die bereit gestellten containerartigen Trays (5) gefüllt oder geschüttet werden, wobei die Schütte beweglich sein kann, um eine gleichmäßige Füllung zu gewährleisten.

Der zum Entladen eingesetzte Flaschenumsetzer (4) weist eine Einrichtung zum Entleeren der Trays (5) auf, die vorzugsweise die Trays (5) umkippt und die Flaschen (30) auf eine Aufnahme schüttet. Eine Richtmaschine oder ein sogenannter Scrambler ordnet anschließend die regellos liegenden Flaschen (30) in einer gewünschten Formation und stellt sie in eine befüllungsgerechte Lage auf, wobei z.B. ein oder mehrere regelmäßige Flaschenreihen gebildet werden.

Am Flaschenumsetzer (4) sind die Trays (5) für die Beladeund Entladevorgänge vereinzelt. In Zirkulationsrichtung des Traykreislaufes (10) ist hierbei jeweils dem Flaschenumsetzer (4) ein Traystapler (6) nachgeordnet, der die vom Flaschenumsetzer (4) zugeführten einzelnen Trays zu einem Traystapel (27) aufeinander stellt und aufschichtet. Der Traystapel (27) wird dann im Traykreislauf (10) an eine Ladestelle weiter transportiert, an der er in der nachfolgend beschriebenen Weise an die Transporteinrichtung (11) übergeben werden kann.

Neben der Ladestelle (8) befindet sich im Traykreislauf (10) eine Entladestelle (9), an der Traystapel (27) von der Transporteinrichtung (11) zugefuhrt und an den Traykreislauf (10) übergeben werden können. Der Entladestelle (9) ist ein Trayentstapler (7) nachgeordnet, der sich in Umlaufrichtung vor dem Flaschenumsetzer (4) befindet und der die Trays (5) aus dem zugeführten Traystapel (27) zur Übergabe an den Flaschenumsetzer (4) vereinzelt. Der Traykreislauf (10) hat für den Transport der Traystapel (27) bzw. der vereinzelten Trays (5) geeignete Fördermittel, z.B. Rollengänge, Förderbänder oder dergleichen. Die Traystapler (6) und die Trayentstapler (7) haben geeignete Greifer und Hubeinrichtungen, mit denen die Trays (5) zum Traystapel (27) aufgeschichtet und bei der Vereinzelung wieder entnommen werden können. Die Ladestellen (8) und Entladestellen (9) besitzen geeignete Übergabevorrichtungen, mit denen die Traystapel (27) vom Traykreislauf (10) an die Transporteinrichtung (11) übergeben und in Gegenrichtung wieder übernommen werden können.

Die Flaschenerzeuger (2) sind mit ihrer Ausgabelinie (3) an den Flaschenumsetzer (4) angeschlossen, der die einzeln und in Schlangen hintereinander zugeführten größeren Flaschen (26) reihenweise aufnimmt und auf die bereit stehenden Trays (5) umsetzt, wobei auf den Trays (5) eine komplette Flaschenlage gebildet wird. Die kleinen Flaschen (30) werden in der vorbeschriebenen Weise in die Trays gefüllt, vorzugsweise regellos geschüttet. Die beladenen Trays (5) werden dann vom Traystapler (6) zu vollen Traystapeln (27) aufgeschichtet und über die Ladestelle (8) an die Transporteinrichtung (11) übergeben.

An den Behandlungsstationen (15) findet ein umgekehrter Vorgang statt. Die mit Flaschen (26,30) befullten Traystapel (27) werden über die Entladestelle (9) den Trayentstapler (7) zugefuhrt, der die beladenen Trays (5) vereinzelt und dem Flaschenumsetzer (4) zuführt. Der Flaschenumsetzer (4) ist an die Eingabelinie (16) der Behandlungsstation (15) angeschlossen. Er entladt die Trays (5) in der vorbeschrieben Weise und übergibt die Flaschen (26,30) geordnet, vorzugsweise in Reihen, an die Eingabelinie (16).

In der gezeigten Ausführungsform ist jedem Flaschenerzeuger (2) und jeder Behandlungsstation (15) ein eigener Traykreislauf (10) zugeordnet, der jeweils einen Flaschenumsetzer (4) mit einem Traystapler (6) und einem Trayentstapler (7) sowie eine Lade- und Entladestelle (8,9) aufweist. Diese Zahl und Zuordnung der Geräte kann beliebig geändert werden. So können sich mehrere Flaschenerzeuger (2) und/oder Behandlungsstationen (15) in einen gemeinsamen Traykreislauf (10) teilen. Die Traykreisläufe (10) können außerdem mehrere Flaschenumsetzer (4), Traystapler und Trayentstapler (6,7) und Lade- und Entladestellen (8,9) aufweisen, die dann in geeigneter Weise parallel zueinander angeordnet sind.

Wie Figur 3 und 5 verdeutlichen, werden die Flaschen (26,30) im Traystapel (27) von den Trays (5) allseitig dicht umgeben und eingeschlossen. Sie sind dadurch gegen äußere Umwelteinflüsse, insbesondere Feuchtigkeit, Staub oder dergleichen, geschützt. Der allseitige Flaschenschutz im Traystapel (27) macht die Anordnung zusätzlicher Verpackungseinrichtungen, z.B. einer Folienpackeinrichtung, entbehrlich. Derartige Zusatzeinrichtungen können aber trotzdem vorhanden sein.

Die abgedichtete Aufnahme der Flaschen (26,30) im Traystapel (27) kann auf verschiedene Weise erreicht werden. In der gezeigten Ausführungsform haben die Trays (5) einen geschlossenen Boden (23) und geschlossene umlaufende Seitenwände (24). Die Trays (5) erhalten hierdurch die Form von einseitig offenen Kisten oder Kästen mit einer beispielsweise rechteckigen Grundfläche. Die Kistenöffnung wird jeweils durch den Boden (23) des darüber liegenden Trays (5) dicht verschlossen. Hierfür bilden die Boden (23) und die Oberkanten der Seitenwande (25). In der gezeigten Ausführungsform von Figur 3 haben die Böden (23) beispielsweise einen nach unten abstehenden umlaufenden Rand, wobei die Seitenwände (24) an der Oberseite eingezogene Ränder besitzen, über die die, Böden (23) formschlüssig im Traystapel (27) greifen.

Bei der Variante der formschlüssigen Führung (25) von Figur 4 haben die Seitenwände (24) am unteren Rand einen nach außen vorstehenden leistenförmigen Vorsprung oder Wulst (28), der beim Stapeln formschlüssig in eine entsprechend ausgebauchte Aufnahme (29) am oberen Rand der Seitenwände (24) des unteren Trays (5) greift. Statt der gezeigten Ausführungsform sind auch beliebige andere Ausgestaltungen möglich.

Der oberste beladene Tray (5) im Traystapel (27) kann durch einen aufgesetzten Deckel (31) oder durch einen leeren Tray (5) verschlossen werden. Bei der Verwendung von Deckeln (31) sind an den Traykreisläufen (10) geeignete Handhabungsgeräte zum Aufsetzen, Entnehmen und Bevorraten der Deckel (28) angeordnet (nicht dargestellt).

Alternativ können auch die anderen Trays (5) im Traystapel (27) mit einem Deckel (31) verschlossen sein, wobei der Deckel die formschlüssigen Führung (25) bildet. Figur 5 zeigt diese Variante, bei der z.B. die Trayböden (23) eingezogene Fußteile (33) und die Deckel (31) einen randseitigen umlaufenden Wulst (34) aufweisen, die formschlüssig ineinander greifen.

Für den Transport können die Traystapel (27) mit einer Transportsicherung (32) versehen sein, die den Traystapel (27) zusammenhält. Dies kann z. B. die in Figur 5 gezeigte Schrumpffolie sein, die den Traystapel (27) zumindest an den Seitenflächen umgibt und zusätzlich noch eine Abdichtung gegen äußere Umwelteinflüsse bietet. Alternativ kann die Stapelsicherung (32) auch als Klammer, als kann die Stapelsicherung (32) auch als Klammer, als umlaufendes Band oder in sonstiger geeigneter Weise ausgebildet sein. Insbesondere können die Stapelsicherungen (32) auch wiederverwendbar sein.

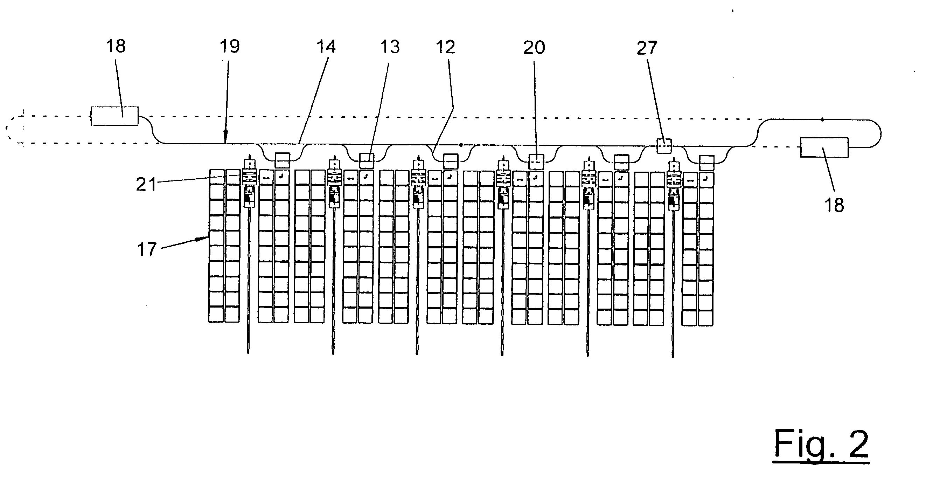

Die Transporteinrichtung (11) verbindet in der gezeigten Ausführungsform von Figur 1 und 2 alle Flaschenerzeuger (2) und alle Behandlungsstationen (15), wobei die Traystapel (27) auf geeigneten Fördermitteln, z.B. Rollengängen, Förderbändern, etc. im Kreislauf geführt werden. Je nach Gestaltung der Flaschenbehandlungsanlage (1) können auch mehrere Transporteinrichtungen (11) mit entsprechenden Verzweigungen und Anschlüssen vorhanden sein.

Zur Beschleunigung des Stapeltransportes hat die Transporteinrichtung (11) eine Hauptstrecke (14) für den durchgängigen und umlaufenden Transport der Traystapel (27). An die Hauptstrecke (14) sind mehrere parallele Nebenstrecken (13) über geeignete Weichen (12) angeschlossen. An den Nebenstrecken (13) befinden sich die Ladestellen (8) und die Entladestellen (9). Zum Be- und Entladen werden die Traystapel (27) von der Hauptstrecke (14) an die jeweilige Nebenstrecke (13) ausgeschleust. Hierdurch können die Be- und Entladevorgänge abseits der Hauptstrecke (14) in Ruhe stattfinden. Die anderen auf der Hauptstrecke (14) befindlichen Traystapel (27) können dadurch ohne Behinderung und ohne Stau an den Nebenstrecken (13) vorbei transportiert werden und zu ihrem Bestimmungsort gelangen. Durch die Nebenstrecken (13) sind außerdem ein unterschiedlich schneller Transport und eine Prioritatenvergabe für Traystapel (27) möglich. Schnellere bzw. schneller benotigte Traystapel (27) können dadurch langsamere Traystapel (27) überholen, wenn diese an den Nebenstrecken (13) ausweichen. in beliebig geeigneter Weise an die Transporteinrichtung (11) angeschlossen sein. In der gezeigten Ausführungsform befinden sich die Transporteinrichtung (11) und das Lager (17) in unterschiedlichen Stockwerken. Die Verbindung erfolgt über zwei Zwischenförderer (18) an den Schleifenenden der Transporteinrichtung (11).

Dem Lager (17) ist eine eigene Fördereinrichtung (19) zugeordnet, die ähnlich wie die Transporteinrichtung (11) ausgebildet ist und Haupt- und Nebenstrecken (14,13) aufweist. Die Fördereinrichtung (19) kann als endliche Strecke oder als geschlossene endlose Schleifenbahn (gestrichelt dargestellt) ausgebildet sein. Sie dient der Beförderung der Traystapel (27) zu den einzelnen Lagerbereichen.

Das Lager (17) ist vorzugsweise als Hochregallager ausgebildet und besitzt mehrere Lagergassen, in denen Lagerförderzeuge (21), hier flurgebundene Regalförderzeuge, verkehren. Jeder Lagerbereich hat eine Be- und Entladestelle (20) mit einer zugehörigen Nebenstrecke (13).

In der gezeigten Ausführungsform haben die Flaschenerzeuger (2) eine geringere Stundenkapazität als die Behandlungsstationen (15) bzw. Füllanlagen. Die Flaschenerzeuger (2) arbeiten beispielsweise im 24-Stunden-Betrieb, während die Behandlungsstationen (15) bzw. die Füllanlagen nur 12 Stunden am Tag in Betrieb sind. In den Stillstandszeiten werden die produzierten Flaschen mit den Traystapeln (27) im Lager (17) zwischen gepuffert. Während des Füllbetriebes wird der Lagerbestand zumindest teilweise wieder abgebaut, wobei den Behandlungsstationen (15) bzw. Füllanlagen Traystapel (27) von den Flaschenerzeugern (2) und aus dem Lager (17) im Mix zu geführt werden. Die Ausbildung der Transporteinrichtung (11) und der Fördereinrichtung (19) mit Haupt- und Nebenstrecken (14,13) ermöglicht dabei ein reibungsloses Ein- und Ausschleusen zwischengelagerter Traystapel (27).

Die kleinen Flaschen (30) werden in besonders großer Zahl und Schnelligkeit von den Flaschenerzeugern (2) hergestellt und vom zugeordneten Flaschenumsetzer (4) in die Trays oder Container (6) gefüllt. Diese kleinen Flaschen (30) können dann ebenfalls vor dem Füllvorgang zunächst in einem Lager (17) zwischengelagert werden. Alternativ können sie aber auch zuerst einer Behandlungsstation (15), z.B. einer Etikettierstation und ggf. auch einer Prüfstation zugeführt werden. Nach dem Etikettieren bzw. dem Prüfen werden sie dann wieder in die Trays (5) gefüllt und anschließend dem Lager (17) zugeführt. Die kleinen Flaschen (30) werden außerdem in unterschiedlichen Farben hergestellt. Im Lager (17) werden sie dann sortenrein für einen schnellen Zugriff gelagert. Vorzugsweise besteht dabei auch innerhalb der Traystapel (27) Sortenreinheit.

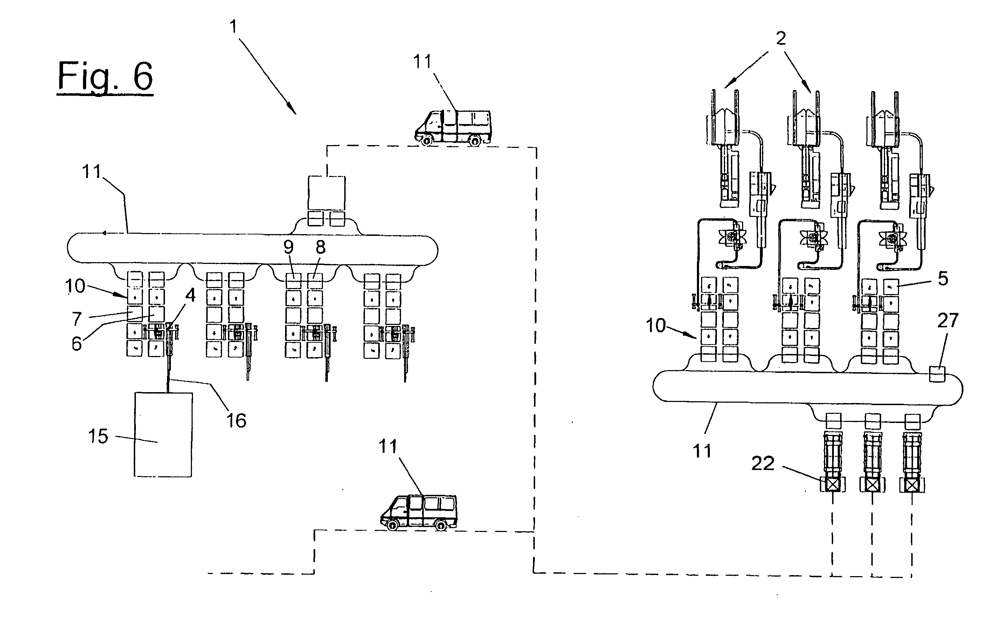

Figur 6 zeigt eine Variante zur Flaschenbehandlungsanlage von Figur 1 und 2. Bei der Ausführungsform von Figur 6 sind die Flaschenerzeuger (2) bzw. die Flaschenzuführungen örtlich getrennt von den Behandlungsstationen (15) angeordnet. Hierbei können die Flaschenerzeuger (2) z. B. ein zentrales Erzeugerzentrum bilden, welches mehrere externe und an verschiedenen Stellen verteilte Füllanlagen (15) versorgt. Am Erzeugerzentrum werden die Flaschen (26,30) in der vorbeschriebenen Weise in die Trays (5) gefüllt und dann in Traystapeln (27) zu den Palettierern (22) oder Film-Bagging-Maschinen gebracht. Dies können auch völlig anders ausgebildete Ausschleus- und Verladestationen sein. An diesen werden die Traystapel (27) auf geeignete Transporteinrichtungen (11), z. B. Straßenfahrzeuge verladen und mit diesen zu den anderen externen Teilen der Flaschenbehandlungsanlage (1) über L and transportiert. Dieser Transport kann je nach Entfernung auch zumindest teilweise zu Luft und zu Wasser erfolgen. An den externen Teilen der Behandlungsanlage (1) werden die Traystapel (27) dann wieder entladen und über eine dortige Transporteinrichtung (11) in geeigneter Weise zu den Behandlungsstationen (15) gebracht. Hierbei findet wiederum an geeigneten Stellen ein Entstapeln und ggf. auch ein erneutes Aufstapeln statt.

Die Trays (5) sind als Mehrwegeverpackungen ausgebildet und können als Leergut wieder zu dem Flaschenerzeugerzentrum zurucktransportiert werden. Die Trays (5) können alternativ aber auch mit den befüllten Flaschen zum Handel und zu den Endverbrauchern transportiert werden, von wo sie ggf. mit dem Leergut wieder zu einer Recyclinganlage und zurück zur Flaschenzuführung gelangen.

Abwandlungen der gezeigten Ausführungsform sind in verschiedener Weise möglich. Die technischen Komponenten der Flaschenbehandlungsanlage (1) können in beliebiger Weise ausgestaltet sein. Dies gilt sowohl für die Maschinen, wie auch für die Trays (5). Die gegenseitige Anordnung und Zuordnung der Anlagenkomponenten kann variieren. Z.B. können zwischen den Flaschenerzeugern (24) und den Flaschenumsetzern (4) in der Ausgabelinie (3) weitere Komponenten, wie Prüfstationen oder dgl. angeordnet sein.

Im weiteren kann das Lager (17) auch den Flaschenerzeugern (2) zugeordnet sein, was vor allem für ein Erzeugerzentrum mit externen und raumlich entfernt angeordneten anderen Teilen der Flaschenbehandlungsanlage (1) vorteilhaft ist. Desgleichen kann auf ein separates Lager (17) alternativ auch verzichtet werden. Das Lager (17) lässt sich ferner in beliebig anderer Weise ausgestalten. Die gezeigte Flaschenbehandlungsanlage (1) ist für hohe Produktionsund Füllkapazitäten ausgelegt. Sie kann auch entsprechend verkleinert oder diversifiziert werden. In Abwandlung der vorbeschriebenen Ausführungsbeispiele kann auch eine Mischung der Ausführungsformen von Figur 1 und 6 gegeben sein, wobei die Flaschenerzeuger (2) von Figur 1. Überkapazitäten haben oder als Erzeugerzentrum ausgebildet sind und außer der eigenen angeschlossenen Füllanlagen (15) auch andere externe Füllanlagen per LKW oder dgl. versorgen.

### BEZUGSZEICHENLISTE

- 1: Flaschenbehandlungsanlage
- 2: Flaschenerzeuger
- 3: Ausgabelinie
- 4: Flaschenumsetzer
- 5: Zwischenträger, Tray
- 6: Traystapler
- 7: Trayentstapler
- 8: Ladestelle
- 9: Entladestelle
- 10: Traykreislauf
- 11: Transporteinrichtung
- 12: Weiche
- 13: Nebenstrecke
- 14: Hauptstrecke
- 15: Behandlungsstation, Füllanlage
- 16: Eingabelinie
- 17: Lager, Stapellager
- 18: Zwischenforderer, Liftstation
- 19: Fördereinrichtung
- 20: Be- und Entladestelle
- 21: Lagerförderzeug
- 22: Palettierer
- 23: Boden
- 24: Seitenwand
- 25: formschlüssige Führung
- 26: Flasche groß
- 27: Traystapel
- 28: Vorsprung, Wulst
- 29: Aufnahme
- 30: Flasche klein
- 31: Deckel
- 32: Stapelsicherung, Schrumpffolie
- 33: Fußteil
- 34: Wulst

## Patentansprüche

1. Verfahren zum Behandeln und insbesondere Transportieren von Flaschen in einer Flaschenbehandlungsanlage (1), bestehend aus mindestens einem Flaschenerzeuger (2) oder einer Flaschenzuführung, mindestens einem Flaschenumsetzer (4), mehreren Trays (5) für die Flaschen (26,30), einer Transporteinrichtung (11), gegebenenfalls mindestens einer Ausschleus- oder Verladestation, vorzugsweise einem Palettierer (22), und mindestens einer Behandlungsstation (15), **dadurch gekennzeichnet, dass** die Flaschen (26,30) anlagenintern zur Ausschleus- oder Verladestation und/oder zu der oder den anlageninternen Behandlungsstation(en) (15) in ein oder mehreren Traystapeln (27) aus stapelbaren Trays (5) transportiert werden, welche geschlossene Seitenwände (24) aufweisen und die Flaschen (26,30) dicht umgeben.

2. Verfahren nach Anspruch 1, **dadurch gekennzeichnet, dass** die Trays (5) im Traystapel (27) gegenseitig dicht abschließen und der oberste Tray (5) mit einem Deckel (31) verschlossen wird.

3. Verfahren nach Anspruch 1 oder 2, **dadurch gekennzeichnet, dass** die Traystapel (27) über Land von der Ausschleus- oder Verladestation zu einer oder mehreren externen Behandlungsstation(en) (15) transportiert werden.

4. Verfahren nach Anspruch 3, **dadurch gekennzeichnet, dass** der Traystapel (27) für den Transport über Land mit einer Stapelsicherung (32), vorzugsweise einer Schrumpffolie, gehalten wird.

5. Verfahren nach einem der Ansprüche 1 bis 4, **dadurch gekennzeichnet, dass** der Traystapel (27) am Flaschenerzeuger (2) oder der Flaschenzuführung und an den Bearbeitungsstationen (15) zuerst entstapelt und anschließend nach Durchführung des Belade- oder Entladevorgangs an den vereinzelten Trays (5) wieder aufgestapelt wird.

6. Flaschenbehandlungsanlage, bestehend aus mindesten einem Flaschenerzeuger (2) oder einer Flaschenzuführung, mindestens einem Flaschenumsetzer (4), mehreren Trays (5) für die Flaschen (26,30), einer Transporteinrichtung (11), gegebenenfalls mindestens einer Ausschleus- oder Verladestation, vorzugsweise einem Palettierer (22), und mindestens einer Behandlungsstation (15), **dadurch gekennzeichnet, dass** die Trays (5) für einen anlageninternen Transport in ein oder mehreren Traystapeln (27) als aufeinander stapelbare Behälter ausgebildet sind, die geschlossene Seitenwände (24) aufweisen und die Flaschen (26,30) dicht umgeben.

7. Flaschenbehandlungsanlage nach Anspruch 6, **dadurch gekennzeichnet, dass** die Trays (5) in etwa gleich hoch oder höher als die Flaschen (26) sind.

8. Flaschenbehandlungsanlage nach Anspruch 6, **dadurch gekennzeichnet, dass** zumindest ein Tray (5) einen abnehmbaren Deckel (31) aufweist.

9. Flaschenbehandlungsanlage nach Anspruch 6, 7 oder 8, **dadurch gekennzeichnet, dass** die Böden (23) und die Oberkanten der Seitenwände (24) der Trays (5) eine gegenseitige formschlüssige Führung (25) aufweisen.

10. Flaschenbehandlungsanlage nach einem der Ansprüche 6 bis 9, **dadurch gekennzeichnet, dass** der Traystapel (27) auf dem Transport von einer Stapelsicherung, vorzugsweise einer Schrumpffolie, gehalten ist.

11. Flaschenbehandlungsanlage nach einem der Ansprüche 6 bis 10, **dadurch gekennzeichnet, dass** dem Flaschenumsetzer (4), der Flaschenzuführung und der Behandlungsstation (15) ein Traystapler (6) nachgeschaltet und ein Trayentstapler (7) vorgeschaltet ist, die am Flaschenumsetzer (4) in einem Traykreislauf (10) angeordnet ist.

12. Flaschenbehandlungsanlage nach einem der Ansprüche 6 bis 11, **dadurch gekennzeichnet, dass** der Traykreislauf (10) über eine Ladestelle (8) und eine Entladestelle (9) für die Traystapel (27) an die Transporteinrichtung (11) angeschlossen ist.

13. Flaschenbehandlungsanlage nach einem der Ansprüche 6 bis 12, **dadurch gekennzeichnet, dass** die Transporteinrichtung (11) für den Transport von Traystapeln (27) ausgelegt und an die Ausschleusoder Verladestation und/oder ein oder mehrere Behandlungsstationen (15) angeschlossen ist.

14. Flaschenbehandlungsanlage nach einem der Ansprüche 6 bis 13, **dadurch gekennzeichnet, dass** die Behandlungsstation (15) mindestens eine Eingabelinie (16) aufweist, die über einen Flaschenumsetzer (4) an den Traykreislauf (10) angeschlossen ist.

15. Flaschenbehandlungsanlage nach einem der Ansprüche 6 bis 14, **dadurch gekennzeichnet, dass** die Ladestellen (8) und die Entladestellen (9) jeweils an einer Nebenstrecken (13) der Transporteinrichtung (11) angeordnet sind, die parallel zur Hauptstrecke (14) verläuft und mit dieser über Weichen (12) verbunden ist.

16. Flaschenbehandlungsanlage nach einem der Ansprüche 6 bis 15, **dadurch gekennzeichnet, dass** die Transporteinrichtung (11) mit mindestens einem Lager (17) für die Traystapel (27) verbunden ist.

17. Flaschenbehandlungsanlage nach einem der Ansprüche 6 bis 16, **dadurch gekennzeichnet, dass** die Transporteinrichtung (11) durch mindestens einen Zwischenförderer (18) an eine dem Lager (17) zugeordnete Fördereinrichtung (19) angebunden ist.

18. Flaschenbehandlungsanlage nach einem der Ansprüche 6 bis 17, **dadurch gekennzeichnet, dass** das Lager (17) eine Be- und Entladestelle (20) aufweist, die an einer Nebenstrecke (13) der Fördereinrichtung (19) angeordnet ist, welche durch Weichen (12) an eine parallel verlaufende Hauptstrecke (14) angebunden ist.

## Claims

1. Method of handling and, in particular, transporting bottles in a bottle-handling plant (1), comprising at least one bottle-producing machine (2) or a bottle feed, at least one bottle-transfer means (4), a plurality of trays (5) for the bottles (26, 30), a transporting device (11), if appropriate at least one discharging or loading station, preferably a palletizer (22), and at least one handling station (15), **characterized in that** the bottles (26, 30) are transported within the plant to the discharging or loading station and/or handling station or stations (15) within the plant in one or more tray stacks (27) consisting of stackable trays (5) which have closed side walls (24) and tightly surround the bottles (26, 30).

2. Method according to Claim 1, **characterized in that** the trays (5) in the tray stack (27) tightly close one another off and the uppermost tray (5) is closed by a lid (31).

3. Method according to Claim 1 or 2, **characterized in that** the tray stacks (27) are transported overland from the discharging or loading station to one or more external handling stations (15).

4. Method according to Claim 3, **characterized in that** for transport overland, the tray stack (27) is retained by a stack-securing means (32), preferably a shrink film.

5. Method according to one of Claims 1 to 4, **characterized in that** the tray stack (27) is first destacked at the bottle-producing machine (2) or the bottle feed and at the processing stations (15) and then stacked up again after the loading or unloading operation has been carried out on the separated trays (5).

6. Bottle-handling plant, comprising at least one bottle-producing machine (2) or a bottle feed, at least one bottle-transfer means (4), a plurality of trays (5) for the bottles (26, 30), a transporting device (11), if appropriate at least one discharging or loading station, preferably a palettizer (22), and at least one handling station (15), **characterized in that**, for transport within the plant in one or more tray stacks (27), the trays (5) are designed as containers which can be stacked one on top of the other, have closed side walls (24) and tightly surround the bottles (26, 30).

7. Bottle-handling plant according to Claim 6, **characterized in that** the trays (5) are approximately the same height as, or are higher than, the bottles (26).

8. Bottle-handling plant according to Claim 6, **characterized in that** at least one tray (5) has a removable lid (31).

9. Bottle-handling plant according to Claim 6, 7 or 8, **characterized in that** the floors (23) and the upper edges of the side walls (24) of the trays (5) have a mutual form-fitting guide (25).

10. Bottle-handling plant according to one of Claims 6 to 9, **characterized in that** the tray stack (27) is retained by a stack-securing means, preferably a shrink film, during transport.

11. Bottle-handling plant according to one of Claims 6 to 10, **characterized in that** a tray stacker (6) is connected downstream, and a tray destacker (7) is connected upstream, of the bottle-transfer means (4), the bottle feed and the handling station (15), said stacker and destacker being arranged in a tray circuit (10) at the bottle-transfer means (4).

12. Bottle-handling plant according to one of Claims 6 to 11, **characterized in that** the tray circuit (10) is connected to the transporting device (11) via a loading point (8) and an unloading point (9) for the tray stacks (27).

13. Bottle-handling plant according to one of Claims 6 to 12, **characterized in that** the transporting device (11) is designed for transporting tray stacks (27) and is connected to the discharging or loading station and/or one or more handling stations (15).

14. Bottle-handling plant according to one of Claims 6 to 13, **characterized in that** the handling station (15) has at least one input line (16) which is connected to the tray circuit (10) via a bottle-transfer means (4).

15. Bottle-handling plant according to one of Claims 6 to 14, **characterized in that** the loading points (8) and the unloading points (9) are each arranged on a subsidiary section (13) of the transporting device (11), which section runs parallel to the main section (14) and is connected to it via diverters (12).

16. Bottle-handling plant according to one of Claims 6 to 15, **characterized in that** the transporting device (11) is connected to at least one store (17) for the tray stacks (27).

17. Bottle-handling plant according to one of Claims 6 to 16, **characterized in that** the transporting device (11) is linked, by means of at least one intermediate conveyor (18), to a conveying device (19) assigned to the store (17).

18. Bottle-handling plant according to one of Claims 6 to 17, **characterized in that** the store (17) has a loading and unloading point (20) which is arranged on a subsidiary section (13) of the conveying device (19), which section is linked, by means of diverters (12), to a main section (14) running parallel.

## Revendications

1. Procédé de traitement et en particulier de transport de bouteilles dans une installation de traitement de bouteilles (1), se composant au moins d'un dispositif de production de bouteilles (2) ou d'un apport de bouteilles, d'au moins un dispositif de transfert de bouteilles (4), de plusieurs plateaux (5) pour les bouteilles (26, 30), d'un dispositif de transport (11), éventuellement d'au moins un poste de déchargement ou de chargement, de préférence d'un palettiseur (22), et au moins d'un poste de traitement (15), **caractérisé en ce que** les bouteilles (26, 30) sont transportées à l'intérieur de l'installation vers le poste de déchargement ou de chargement et/ou vers le ou les postes de traitement (15) à l'intérieur de l'installation dans une ou plusieurs piles de plateaux (27) constituées de plateaux empilables (5), lesquels présentent des parois latérales fermées (24) et entourent étroitement les bouteilles (26, 30).

2. Procédé selon la revendication 1, **caractérisé en ce que** les plateaux (5) se ferment mutuellement étroitement dans la pile de plateaux (27) et le plateau supérieur (5) est fermé par un couvercle (31).

3. Procédé selon la revendication 1 ou 2, **caractérisé en ce que** les piles de plateaux (27) sont transportées par voie terrestre depuis le poste de déchargement ou de chargement jusqu'à un ou plusieurs postes de traitement externes (15).

4. Procédé selon la revendication 3, **caractérisé en ce que** la pile de plateaux (27) pour le transport par voie terrestre est maintenue par une fixation de pile (32), de préférence une pellicule rétractable.

5. Procédé selon l'une quelconque des revendications 1 à 4, **caractérisé en ce que** la pile de plateaux (27) est d'abord désempilée sur le dispositif de production de bouteilles (2) ou l'apport de bouteilles et sur les postes de traitement (15) puis est à nouveau empilée après la mise en oeuvre de l'opération de chargement ou de déchargement sur les plateaux séparés (5).

6. Installation de traitement de bouteilles, se composant au moins d'un dispositif de production de bouteilles (2) ou d'un apport de bouteilles, d'au moins un dispositif de transfert de bouteilles (4), de plusieurs plateaux (5) pour les bouteilles (26, 30), d'un dispositif de transport (11), éventuellement d'au moins un poste de déchargement ou de chargement, de préférence d'un palettiseur (22), et au moins d'un poste de traitement (15), **caractérisée en ce que** les plateaux (5) sont agencés pour un transport à l'intérieur de l'installation en une ou plusieurs piles de plateaux (27) sous forme de récipients empilables les uns sur les autres, qui présentent des parois latérales fermées (24) et qui entourent étroitement les bouteilles (26, 30).

7. Installation de traitement de bouteilles selon la revendication 6, **caractérisée en ce que** les plateaux (5) sont approximativement aussi hauts ou plus hauts que les bouteilles (26).

8. Installation de traitement de bouteilles selon la revendication 6, **caractérisée en ce qu'**au moins un plateau (5) présente un couvercle amovible (31).

9. Installation de traitement de bouteilles selon la revendication 6, 7 ou 8, **caractérisée en ce que** les fonds (23) et les bords supérieurs des parois latérales (24) des plateaux (5) présentent un guidage (25) par coopération de forme mutuel.

10. Installation de traitement de bouteilles selon l'une quelconque des revendications 6 à 9, **caractérisée en ce que** la pile de plateaux (27) est maintenue au cours du transport par une fixation de pile, de préférence une pellicule rétractable.

11. Installation de traitement de bouteilles selon l'une quelconque des revendications 6 à 10,
**caractérisée en ce que** le dispositif de transfert de bouteilles (4), l'apport de bouteilles et le poste de traitement (15) sont suivis d'un appareil d'empilage de plateaux (6) et précédés d'un appareil de désempilage de plateaux (7) qui est disposé sur le dispositif de transfert de bouteilles (4) dans un circuit de plateaux (10).

12. Installation de traitement de bouteilles selon l'une quelconque des revendications 6 à 11, **caractérisée en ce que** le circuit de plateaux (10) est raccordé par le biais d'une zone de chargement (8) et d'une zone de déchargement (9) pour les piles de plateaux (27) au dispositif de transport (11).

13. Installation de traitement de bouteilles selon l'une quelconque des revendications 6 à 12, **caractérisée en ce que** le dispositif de transport (11) est conçu pour le transport de piles de plateaux (27) et est raccordé au poste de déchargement ou de chargement et/ou à un ou plusieurs postes de traitement (15).

14. Installation de traitement de bouteilles selon l'une quelconque des revendications 6 à 13, **caractérisée en ce que** le poste de traitement (15) présente au moins une ligne d'entrée (16) qui est raccordée au circuit de plateaux (10) par le biais d'un dispositif de transfert de bouteilles (4).

15. Installation de traitement de bouteilles selon l'une quelconque des revendications 6 à 14, **caractérisée en ce que** les zones de chargement (8) et les zones de déchargement (9) sont disposées respectivement sur une section secondaire (13) du dispositif de transport (11) qui s'étend parallèlement à la section principale (14) et qui est connectée à celle-ci par le biais d'aiguilles (12).

16. Installation de traitement de bouteilles selon l'une quelconque des revendications 6 à 15, **caractérisée en ce que** le dispositif de transport (11) est connecté à au moins un stock (17) pour les piles de plateaux (27).

17. Installation de traitement de bouteilles selon l'une quelconque des revendications 6 à 16, **caractérisée en ce que** le dispositif de transport (11) est relié à un dispositif d'alimentation (19) associé au stock (17) par au moins un convoyeur intermédiaire (18).

18. Installation de traitement de bouteilles selon l'une quelconque des revendications 6 à 17, **caractérisée en ce que** le stock (17) présente une zone de chargement et de déchargement (20) qui est disposée sur une section secondaire (13) du dispositif d'alimentation (19), qui est relié par des aiguilles (12) à une section principale (14) s'étendant parallèlement.
